# EUROPEAN PATENT APPLICATION

(11) **EP 1 811 377 A1**
(43) Date of publication of application: **25.07.2007**
(21) Application number: 05795101.4
(22) Date of filing: 24.10.2005
(51) Int. Cl.: G06F 11/00, H04N 7/173, G11B 20/10

(54) **RECEIVER DEVICE**

(30) Priority: 27.10.2004 JP 2004311766
(71) Applicant: MATSUSHITA ELECTRIC INDUSTRIAL CO., LTD., Osaka 571-8501 (JP)
(72) Inventor: ICHIKAWA, Kei c/o Matsushita Electric Industrial Co., Ltd., Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/019492
(87) International publication number: WO 2006/046506

(57) **Abstract**

The management of an update program is facilitated by reducing the total data of an update program, which is transmitted and received by utilizing broadcasting waves to and from a group of receiver devices belonging to the same kind but having a plurality of hardware versions of its internal device(s). A receiver device includes a processing section for executing a first program to control an operation of the device; an internal device for retaining a second program and executing the second program under control of the processing section to function based on the second program; a receiving section for receiving program data on an update of a program; and a storage section for storing the first program and the received program data. One of hardware versions is adopted for the internal device, each hardware version having a corresponding second program. The program data contains first update information and multiple pieces of second update information. The first update information concerns an update of the first program, and each second update information concerns an update of each second program.

## Description

### TECHNICAL FIELD

The present invention relates to an device which receives contents. More specifically, the present invention relates to a technique which utilizes digital broadcast waves or a network to receive and update a computer program for operating a microcomputer, an internal device, or the like that is mounted in an apparatus.

### BACKGROUND ART

With the prevalence of digital broadcasts in the recent years, apparatuses are becoming popular which record programs of digital broadcasts onto a hard disk, a disk-type storage medium or the like, and play back such programs. Many of such apparatuses have various functions which exploit the characteristics of digital broadcasts. One example is a function of updating the computer program for a main microcomputer, etc., of the apparatus. A new version of computer program for update is acquired from the broadcast waves of a digital broadcast.

In the case of a television set, a set-top box (STB), or the like, it suffices to merely update the software of the main microcomputer. In the recent years, however, an internal device (e.g., a DVD drive) is often incorporated which operates based on a separate piece of firmware other than the firmware of the main microcomputer. In an apparatus like this, it may become necessary to update the firmware of the internal device.

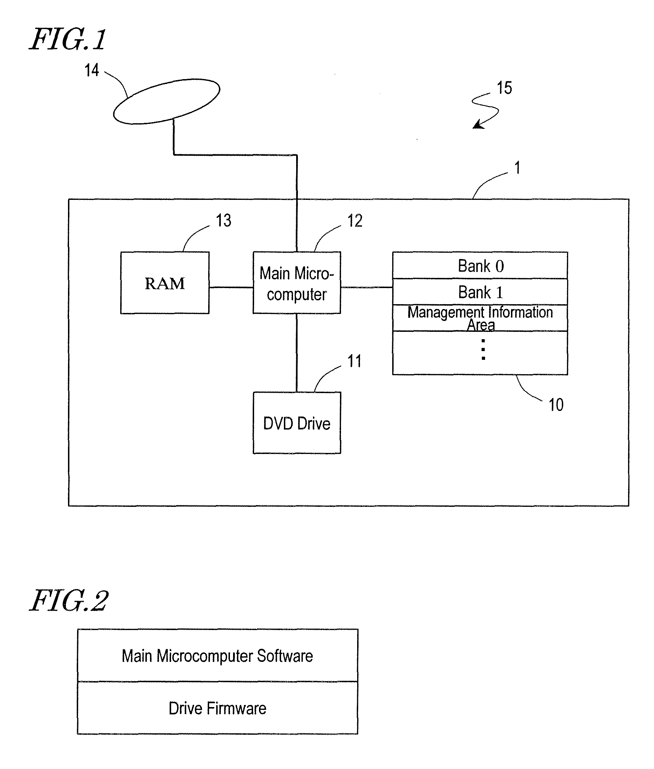

Hereinafter, with reference to FIG. **1** to FIG. **3,** the construction of a conventional DVD recorder which is capable of receiving and recording a digital broadcast program (hereinafter simply referred to as a "DVD recorder") will be described, followed by a description of an update procedure.

FIG. **1** shows the construction of a broadcast receiving system **15** which includes a conventional DVD recorder **1.** The broadcast receiving system **15** includes the DVD recorder **1** and an antenna **14** with which to receive broadcasts.

A non-volatile memory **10** of the DVD recorder **1** has two areas (banks 0, 1) for storing software for the main microcomputer and a management information area. Valid software is stored in only one of the banks. The management information area stores bank information that indicates a bank in which valid software is stored.

A DVD drive **11** internalizes its own firmware. Based on this firmware, the DVD drive **11** writes data of a digital broadcast program to a DVD, and reads data that has been written.

In a digital broadcast, in addition to AV contents of the broadcast program, a computer program for a digital broadcast receiver device, such as the DVD recorder **1,** may be contained. FIG. **2** shows the data structure of an update computer program. This computer program contains software for the main microcomputer **12** and firmware for the DVD drive **11.** Herein, a computer program for the microcomputer is referred to as "software", whereas a computer program for the DVD drive **11** is referred to as "firmware". Furthermore, these are together referred to as a "computer program". This computer program is transmitted and received as one piece of data.

The transmission schedule of the computer program is notified in advance by broadcast waves. While monitoring this schedule, the DVD recorder **1** organizes scheduling for downloads. If not being used by a user at a scheduled time, the DVD recorder **1** performs a download process.

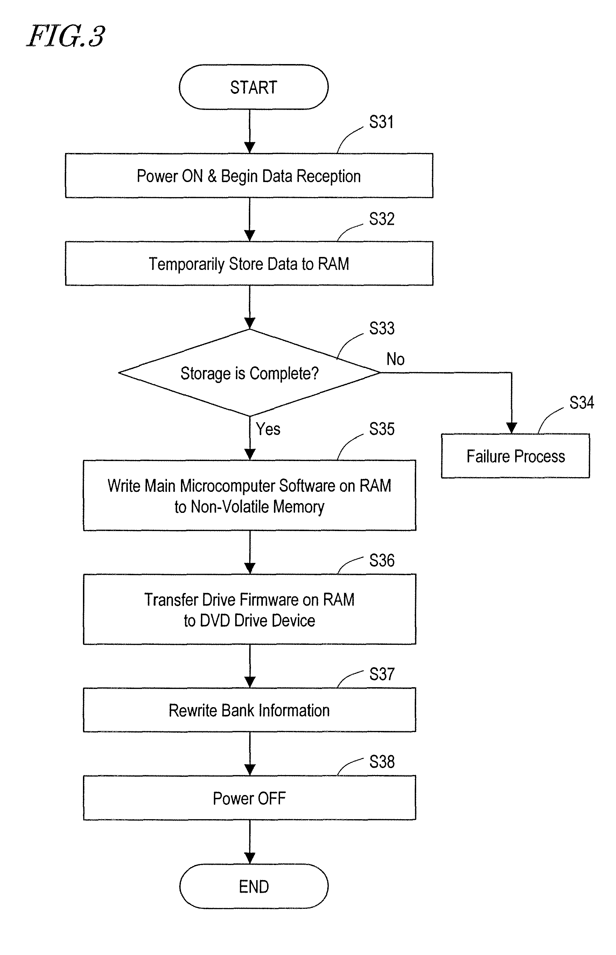

With reference to FIG. **3,** an updating process for the computer program will be described. It is assumed that the DVD recorder **1** is powered OFF but is energized so as to be in a state of awaiting an input from the user.

FIG. **3** shows the procedure of an updating process for a computer program. Upon determining that it is possible to perform a download operation at the start time of a scheduled download, the DVD recorder **1** powers itself ON in order to begin receiving program data **(S31).** The received data is sequentially temporarily stored in a RAM **13 (S32).** When the data broadcast is over, it is checked whether storage is completed or not **(S33).** If proper storage has not occurred due to a disruption of the broadcast waves or the like, this instance of download operation is regarded as a failure, and a failure process is performed **(S34).**

If the storage is complete, out of the data on the RAM **13,** the DVD recorder **1** writes data of the software for the main microcomputer to the non-volatile memory **10 (S35).** Assuming that valid software was stored in bank 0 of the non-volatile memory **10** prior to the download, the DVD recorder **1** writes the software data for the main microcomputer on the RAM to bank 1.

Next, the DVD recorder **1** transfers firmware for the DVD drive **11,** which is on the RAM **13,** to the DVD drive **11 (S36).** Having received the transferred data, the DVD drive **11** updates its own firmware.

Next, the DVD recorder **1** rewrites the bank information which is stored in the management information area of the non-volatile memory **10** so as to indicate bank 1, instead of bank 0 **(S37).** Then, the download operation is ended, and power is turned OFF **(S38).**

The process to occur upon next boot is as follows. The main microcomputer **12** first refers to the bank information which is stored in the non-volatile memory **10.** Then, the software in bank 1, as indicated by the bank information, is executed. As a result, the new version of software is executed.

As shown in FIG. **2,** the software for the main microcomputer **12** and the firmware for the DVD drive **11** are transmitted/received as a single piece of data. However, they may be transmitted/received while being separated into discrete data. For example, Patent Document 1 discloses a technique in which, when downloading software, any computer program for a peripheral device other than the main microcomputer is downloaded separately.

There are some DVD recorders which, even though distributed as the same model on the market, have different internal constructions depending on the time of shipment and the like. For example, there may exist the same model of DVD recorders which are identical in terms of hardware versions of the main microcomputers but are different in terms of hardware versions of the DVD drives. In this case, the same version of software is used for the main microcomputers, but different versions of firmware are stored in the DVD drives depending on the hardware versions. Such a situation is also contemplated for apparatuses other than DVD recorders.
[Patent Document 1] Japanese Laid-Open Patent Publication No. 2002-152650

### DISCLOSURE OF INVENTION

### PROBLEMS TO BE SOLVED BY THE INVENTION

When the traditional data structure (FIG. 2) is utilized for transmitting/receiving update computer programs for the same model of apparatuses which have different internal constructions, there is a problem in that the manufacturer's burden of management which is necessary for computer program update is increased. For example, at the time of a computer program download, the manufacturer needs to attach different model IDs to different hardware versions even if they may be of the same model, thus treating them as different models for the sake of convenience. Then it is necessary to prepare as many computer programs as there are model IDs, and create separate transmission schedules.

Furthermore, there is also a problem in that the entire data amount to be transmitted becomes very large. In the case of a DVD recorder, the data volume of firmware is about 1 to 2MB. On the other hand, microcomputer software has a data volume of 20 to 30MB. Therefore, if a computer program is transmitted/received by utilizing the traditional data structure (FIG. **2**), the microcomputer software will be transmitted the same number of times as there are versions of DVD drives. This will result in a waste of broadcast wave resource.

An object of the present invention is to provide a data structure for an update computer program which, in the presence of a group of apparatuses which are of the same model but whose internal devices are of different hardware versions, reduces the total data amount of update computer programs for the internal devices to be transmitted/received by utilizing digital broadcasts, and also facilitates their management. Another object is to provide a process for applying such an update computer program.

### MEANS FOR SOLVING THE PROBLEMS

A receiver device according to the present invention is to be used when receiving a content. The receiver device comprises: a processing section for executing a first computer program to control an operation of the receiver device; an internal device for retaining a second computer program and executing the second computer program under control of the processing section to function based on the second computer program; a receiving section for receiving the content and receiving program data concerning an update of a computer program; and a storage section for storing the first computer program and the received program data. One of a plurality of hardware versions is adopted for the internal device, each hardware version having a corresponding second computer program. The program data contains first update information and a plurality of pieces of second update information. The first update information concerns an update of the first computer program, and each of the plurality of pieces of second update information concerns an update of each second computer program.

The storage section may have a first area in which an existing old program version of the first computer program is stored, and a second area different from the first area; and when the first update information contains a new program version of the first computer program, the processing section may cause the first update information to be stored in the second area.

The storage section further may have a management area in which area indication information is stored, the area indication information indicating one of the first area and the second area; and when the new program version of the first computer program has been stored in the second area, the processing section may generate area indication information indicating the second area and cause the area indication information to be stored in the management area.

In accordance with the area indication information, the processing section may read the new program version of the first computer program from the second area, and execute the new program version of the first computer program.

The storage section further may have a third area for storing each of the plurality of pieces of second update information.

Each of the plurality of pieces of second update information may have type information specifying a corresponding hardware version for the internal device; and the processing section may compare a hardware version of the mounted internal device and the hardware version specified by the type information, and, in accordance with a result of comparison, read one of the plurality of pieces of second update information and transfer the piece of second update information to the internal device.

Each of the plurality of pieces of second update information may have version information indicating a program version of the second computer program; and the processing section may compare a program version of the second computer program in the mounted internal device and a program version of the second computer program in the second update information specified by the hardware version information of the internal device, and in accordance with a result of comparison, transfer the second update information to the internal device.

The internal device may update the second computer program based on the transferred second update information.

The storage section may have a management area for storing flag information indicating a result of comparison between program versions of the second computer program; and the processing section may generate flag information indicating a non-matching result of comparison, and cause the flag information to be stored in the management area.

In accordance with the flag information, the processing section may read a piece of second update information that corresponds to the mounted internal device from among the plurality of pieces of second update information in the second area, and transfer the piece of second update information to the internal device.

The storage section may be a non-volatile memory.

The internal device may be a recording device for storing data of the received content to the storage medium.

### EFFECTS OF THE INVENTION

In accordance with a receiver device of the present invention, in a situation where a plurality of hardware versions exist for internal devices pertaining to the same model, software for the processing section and the respective pieces of firmware corresponding to the plurality of hardware versions of the internal device are collectively downloaded. As a result, the total data amount of an update computer program which is transmitted/received by utilizing broadcast waves is reduced, thereby facilitating management of the update computer program.

Each piece of firmware contains type information, which indicates a hardware version for the internal device that corresponds to that piece of firmware. Based on the hardware version of the internal device and the type information of each piece of firmware, the processing section reads a piece of firmware corresponding to that internal device and transfers the firmware to the internal device. As a result, a firmware update which suits the hardware construction can be performed.

### BRIEF DESCRIPTION OF DRAWINGS

[FIG. **1**] A diagram showing the construction of a broadcast receiving system **15** which includes a conventional DVD recorder **1.**
[FIG. **2**] A diagram showing the data structure of an update computer program.
[FIG. **3**] A diagram showing the procedure of an updating process for a computer program.
[FIG. **4**] A diagram showing the construction of a broadcast receiving system **20** according to the present embodiment.
[FIG. **5**] A diagram showing an exemplary data structure of computer program data which is acquired from broadcast waves.
[FIG. **6**] A diagram showing the procedure of a computer program data receiving process.
[FIG. **7**] A diagram showing the procedure of an updating process of drive firmware.
[FIG. **8**] **(a)** to **(c)** are diagrams showing data transition on a non-volatile memory 34.

### DESCRIPTION OF THE REFERENCE NUMERALS

- **20**: broadcast receiving system
- **21**: DVD recorder
- **22**: antenna
- **23**: remote control
- **31**: main microcomputer
- **32**: DVD drive
- **33**: RAM
- **34**: non-volatile memory
- **35**: timer microcomputer
- **36**: photosensitive portion
- **37**: tuner

### BEST MODE FOR CARRYING OUT THE INVENTION

Hereinafter, with reference to the accompanying drawings, an embodiment of a receiver according to the present invention will be described. As an example of a receiver, a DVD recorder which is capable of receiving and recording a digital broadcast program (hereinafter referred to as a "DVD recorder") will be illustrated below.

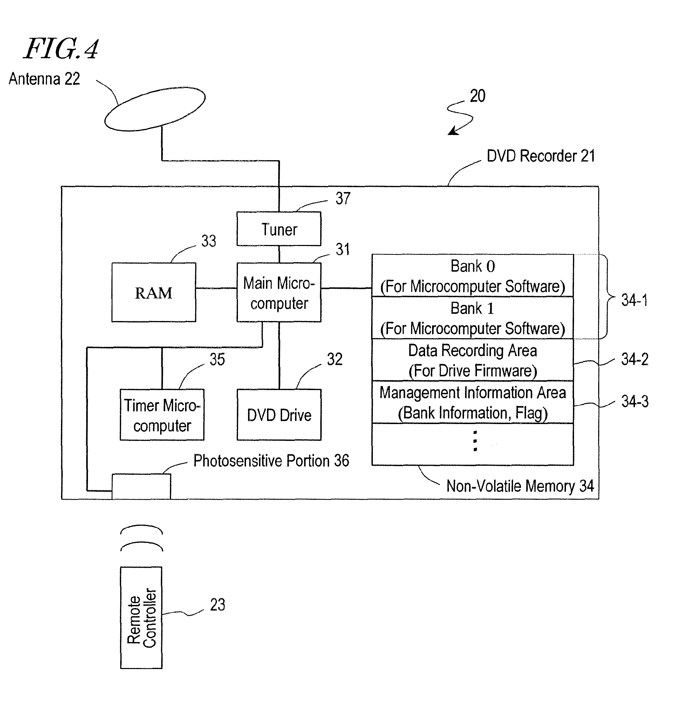

FIG. **4** shows the construction of a broadcast receiving system **20** according to the present embodiment. The broadcast receiving system **20** is composed of a DVD recorder **21,** an antenna **22,** and a remote control **23.**

The DVD recorder **21** includes a main microcomputer **31,** a DVD drive **32,** a RAM **33,** a non-volatile memory **34,** a timer microcomputer **35** for controlling a timer, a photosensitive portion **36,** and a tuner **37.**

The functions of the DVD recorder **21** will be generally described. The functions of the DVD recorder **21** are realized based on processes which are defined in microcomputer software. The main microcomputer **31** executes microcomputer software to control the operation of the DVD recorder **21.** For example, the DVD recorder **21** receives an instruction from a user via the remote control **23** or the like, and based on this instruction, begins receiving a digital broadcast program (content). Then, by utilizing the internal DVD drive **32,** it is stored on a recordable DVD (DVD-R, -RAM, DVD-RW, DVD+RW or the like).

The DVD recorder **21** is capable of receiving computer program data which is transmitted by utilizing broadcast waves. This computer program data contains microcomputer software to be executed by the main microcomputer and firmware for the DVD drive. By utilizing this computer program data, the DVD recorder **21** updates existing microcomputer software and firmware.

The DVD recorder **21** is commercially available, and the same model of DVD recorders having the same functions are also available. However, a situation will be considered below where there are differences between the internal construction of the DVD recorder **21** and the internal construction of any other DVD recorder, even if they may be distributed as the same model.

Specifically, it is assumed that a plurality of hardware versions exist for the DVD drive. A DVD drive **32** of a predetermined hardware version is adopted in the DVD recorder **21,** whereas a DVD drive of a hardware version different from this hardware version is adopted in the aforementioned other DVD recorder. Differences in hardware version emanate from, for example, differences in the manufacturers of the DVD drives, differences in the processing chips which are adopted in the DVD drives, and the like. Corresponding to the hardware version differences of the DVD drives, the firmware for causing the DVD drives to function also differ. Herein, it is assumed that the main microcomputer is identical among all DVD recorders of the same model.

In the above situation, the computer program data which is acquired from broadcast waves contains information concerning update of microcomputer software and information concerning update of each program version of firmware.

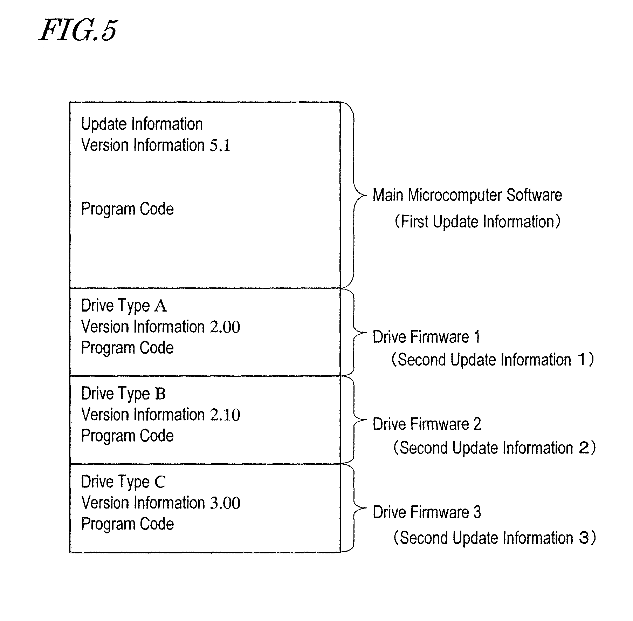

FIG. **5** shows an exemplary data structure of computer program data which is acquired from broadcast waves. In the computer program data, main microcomputer software is disposed in the first place, consecutively followed by drive firmware **1** to **3.** The main microcomputer software (first update information) corresponds to the aforementioned information concerning update of microcomputer software, whereas drive firmware **1** to **3** (second update information **1** to **3**) correspond to information concerning update of each program version of firmware.

Three types of drive firmware are contained in the computer program data. This means that three hardware versions exist for the DVD drive **32.** This computer program data is stored in the non-volatile memory **34.** Note that the number of hardware versions is exemplary, and there may be two, or four or more. The number of pieces of drive firmware increases or decreases in accordance with the number of hardware versions.

In the present embodiment, it is assumed that the format of computer program data is fixed as shown in FIG. **5.** Accordingly, the computer program data contains information concerning update of microcomputer software and information concerning update of each program version of firmware. The information concerning update of microcomputer software includes update information, version information, and program code. The information concerning update of each program version of firmware includes a drive type, version information, and program code.

Note that, among the three pieces of drive firmware, it may so happen that only a specific version is updated while the others are not updated. In this case, the non-update firmware does not need to include any program code.

Transmission of computer program data occurs as the manufacturer of the DVD recorder **21** asks a broadcast station to perform the transmission. The manufacturer provides the broadcast station with the computer program data for transmission, and the broadcast station creates a transmission schedule.

Note that the main microcomputer software and the drive firmware could be separately transmitted based on independent transmission schedules. However, when such a manner of transmission is adopted, it is conceivable that the timing of main microcomputer software update will not coincide with the timing of drive firmware update in most cases. This requires the manufacturer to perform verifications to ensure operation even when one is updated while the other is not updated, thus resulting in a very heavy burden of verification. Therefore, in the present embodiment, one piece of computer program data as shown in FIG. **5** is transmitted. As a result, the manufacturer only needs to verify operation on the premise that the main microcomputer software and the drive firmware are updated substantially simultaneously, whereby an increase in the burden of verification is suppressed.

FIG. **4** is referred to again. If a new version of microcomputer software is contained, the main microcomputer **31** of the DVD recorder **21** updates the existing old version to the new version. Moreover, if a new version of firmware corresponding to the internalized DVD drive **32** is contained, the main microcomputer **31** reads the new version of firmware from the non-volatile memory **34,** and transfers it to the DVD drive **32.** The DVD drive **32** updates the existing old version to the new version.

The manufacturer only needs to prepare all pieces of firmware that correspond to the existing hardware versions, and have them collectively transmitted via broadcast waves, whereby the management burden required for the computer program update is reduced. Moreover, since all pieces of firmware are transmitted as a single piece of computer program data together with the microcomputer software, only one transmission of microcomputer software is required. In other words, it is not necessary to transmit microcomputer software (which has a large data amount) the same number of times as there are firmware versions of DVD drives. Thus, a waste of broadcast wave resource is avoided.

Hereinafter, the functions of the constituent elements of the DVD recorder **21** will be described. Thereafter, the updating process of the computer program of the DVD recorder **21** will be described in detail.

The main microcomputer **31** is a semiconductor processor. The main microcomputer **31** executes microcomputer software, and exerts general control of the operation of the DVD recorder **21** on the basis of the processes which are defined in the microcomputer software. For example, the microcomputer software is a computer program of recording, playback, editing, etc., of broadcast programs, and realizes the recording function, playback function, and editing function of the DVD recorder **21.**

The DVD drive **32** retains dedicated firmware. The DVD drive **32** communicates with the main microcomputer **31,** and executes firmware based on control commands from the main microcomputer **31.** As a result, the DVD drive **32** operates on the basis of the processes which are defined in the firmware. For example, the firmware is a computer program of type determination of the DVD loaded in the DVD drive **32,** focusing, data read/write, etc. Based on this firmware, the DVD drive **32** writes data of a digital broadcast program to a DVD, and reads written data. Note that, strictly speaking, the functions of the DVD drive **32** are realized by an internal calculation chip (not shown) executing the firmware. However, the present specification will illustrate the DVD drive **32** as executing the firmware because, when the firmware is executed, the entire DVD drive **32** operates to realize certain functions.

The RAM **33** temporarily stores content and computer program data.

The non-volatile memory **34** generally includes three areas, i.e., a first data recording area **34-1** composed of two banks 0 and 1, a second data recording area **34-2,** and a management information area **34-3.** Note that it would also be possible to provide areas other than the above three areas.

Bank 0 and bank 1 are utilized for storing microcomputer software for the main microcomputer. During usual operation of the DVD recorder **21,** valid microcomputer software is stored in only one of the banks. Various data are temporarily stored in the other bank.

In the data recording area **34-2,** all pieces of firmware for the DVD drive **32** that have been acquired from digital broadcast waves are sequentially stored, in a distinguishable manner. Note that the data recording area **34-2** may be divided into a plurality of subdivisional areas, such that each subdivisional area stores each piece of firmware. The number of subdivisional areas may be determined in view of the prospective maximum number of hardware versions for the DVD drive in the future. In order to support the example shown in FIG. **5,** at least three subdivisional areas will suffice.

In the management information area **34-3,** management information such as bank information and a flag is stored. The bank information specifies a bank in which the target microcomputer software for execution is stored. The flag indicates whether the drive firmware is to be updated or not.

The timer microcomputer **35** transfers to the main microcomputer **31** an operation command transmitted from the remote control **23.** The timer microcomputer **35** is kept energized even in a power-off state of the DVD recorder **21,** and upon receiving a power-on command from the remote control **23** in this state, causes the DVD recorder **21** to transition to a power-on state. Moreover, the timer microcomputer **35** manages the scheduled recording schedule, and powers ON /OFF the DVD recorder **21** at a scheduled point in time.

The photosensitive portion **36** receives an infrared signal which is transmitted from the remote control **23,** and generates an operation command.

The tuner **37** is a receiving section for receiving at the DVD recorder **21** the digital broadcast waves which have been output from the antenna **22.** From among a plurality of channels which are contained in the digital broadcast waves, the tuner **37** selects a designated channel, and outputs the digital data on that channel.

Next, the preprocessing for a computer program update will be described, and thereafter a computer program updating process will be described.

A schedule concerning the time slot, channel, etc., according to which computer program data will be transmitted via broadcast waves is notified in advance via broadcast waves. As preprocessing of the software update, the DVD recorder **21** first acquires information of this schedule via the antenna **22.**

Based on the acquired information, the main microcomputer **31** generates scheduling information. The scheduling information is information concerning the operation of booting at a point in time when it is possible to receive computer program data and receiving the computer program data. This operation is similar to the process of setting a recording time slot, a channel, and the like when scheduling a recording. The main microcomputer **31** transfers the scheduled information to the timer microcomputer **35.**

The timer microcomputer **35** stores and manages this scheduling information. Note that the updating process is carried out while the user is not using the apparatus (power-off state), and if the user happens to be operating the apparatus, that instance of scheduling is skipped.

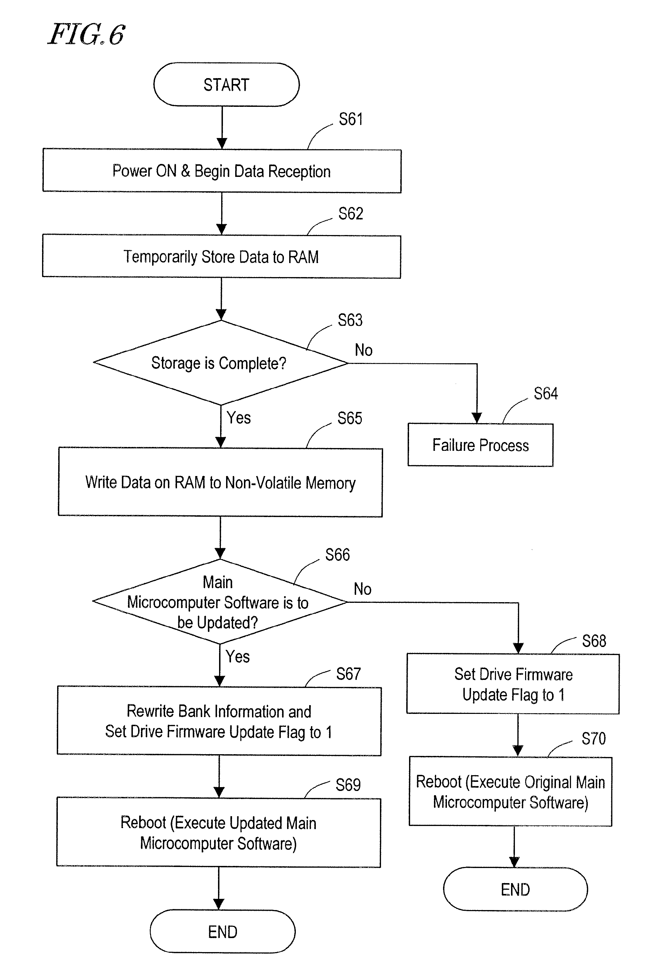

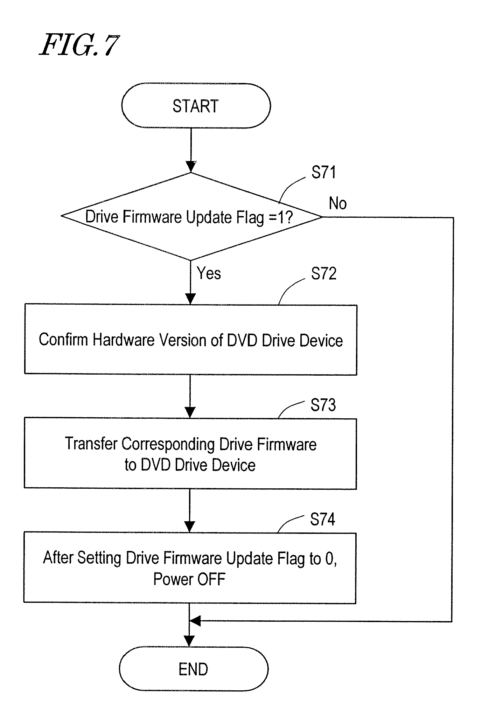

Next, the computer program updating process will be described with reference to FIGS. **6** and **7.** Hereinafter, it is assumed that computer program data as shown in FIG. **5** is received and the main microcomputer software and the respective pieces of drive firmware are to be updated.

FIG. **6** shows the procedure of a computer program data receiving process. If a point in time has been reached when it is possible to receive computer program data and the DVD recorder **21** is in a power-OFF state, the following process is begun. Note that the data structure of the computer program data is as shown in FIG. **5.**

At step **S61,** the timer microcomputer **35** powers ON the DVD recorder **21,** and boots the main microcomputer **31.** Having booted, the main microcomputer **31** begins receiving computer program data via the antenna **22** and the tuner **37.** At step **S62,** the main microcomputer **31** temporarily stores the received computer program data sequentially into the RAM **33.** When the broadcast of the computer program data is over, control proceeds to step **S63.**

At step **S63,** the main microcomputer **31** checks whether storage of the computer program data has been properly completed or not. For example, if it was not to possible to perform data correction due to a disruption of the broadcast waves, it is determined that the storage has not been properly completed. If it has not been completed, control proceeds to step **S64;** if it has been completed, control proceeds to step **S65.** At step **S64,** this instance of computer program data acquisition is regarded as a failure, and a failure process (destruction of data, etc.) is performed, thus ending the process.

At step **S65,** the main microcomputer **31** sends the computer program data on the RAM **33** to the non-volatile memory **34,** where the computer program data is allowed to be stored. Hereinafter, this will be described more specifically. In the present embodiment, it is assumed that, when receiving the computer program data, the microcomputer software which is stored in bank 0 of the non-volatile memory **34** is activated as a target of execution.

Out of the computer program data on the RAM **33,** the main microcomputer **31** writes data of the main microcomputer software to bank 1 of the non-volatile memory **31.** The reason why two banks are provided and the above is written to bank 1, which is different from bank 0, is as follows. By doing so, even if an unexpected situation (e.g., power outage) occurs in the middle of a downloading or an updating process, a state before the download can be restored. Furthermore, out of the computer program data on the RAM **33,** the main microcomputer **31** records drive firmware 1 to 3 to the data recording area **34-2** of the non-volatile memory **34.**

At the next step **S66,** the main microcomputer **31** confirms whether the main microcomputer software is to be updated or not. As shown in FIG. **5,** the main microcomputer software includes update information. The update information indicates whether the main microcomputer software is to be updated or not. The main microcomputer **31** refers to the update information; if an update is to be made, control proceeds to step **S67,** and if an update is not to be made, control proceeds to step **S68.**

Alternatively, the main microcomputer **31** may rely on the version information of the main microcomputer software to determine whether an update is to be made or. A version which is indicated by the version information and a version of the main microcomputer software which is currently stored in bank 0 (and activated) are compared. If they match, absence of an update may be determined; and if they differ, an update may be determined.

At step **S67,** the main microcomputer **31** rewrites the bank information which is stored in the management information area **34-3** of the non-volatile memory **34.** In the present embodiment, the main microcomputer **31** rewrites the main microcomputer bank information from 0 to 1. Moreover, the main microcomputer **31** rewrites the update flag stored in the management information area **34-3** from 0 to 1. Thereafter, the process proceeds to step **S69.**

At step **S69,** the main microcomputer **31** instructs the timer microcomputer **35** to reboot the DVD recorder **21.** In response to the reboot instruction, the timer microcomputer **35** once powers OFF the DVD recorder **21** and powers it ON immediately afterwards, thus rebooting the DVD recorder **21.** The purpose of rebooting is to allow the main microcomputer **31** to operate based on the updated main microcomputer software, which is stored in bank 1. The detailed processes after the reboot will be described later with reference to FIG. **7.**

On the other hand, at step **S68,** the main microcomputer **31** rewrites the update flag stored in the management information area **34-3** from 0 to 1. Thereafter, a reboot is executed at step **S70.** Since the main microcomputer software is not to be updated in this case, the original main microcomputer software is executed. Thereafter, an updating process as shown in FIG. **7** is performed.

Note that, once the updated main microcomputer software is properly executed, bank 0 (in which the main microcomputer software before the update was stored) will thereafter be used as a temporary data storage area.

Next, the updating process will be described with reference to FIG. **7.** FIG. **7** shows the procedure of an updating process of drive firmware. Note that, this updating process is performed in accordance with the microcomputer software which is stored in the bank designated by the bank information.

At step **S71,** the main microcomputer **31** determines whether the value of the update flag for drive firmware is 1 or not. If the value is set to 1, the process proceeds to step **S72,** where a process of updating the drive firmware for the DVD drive **32** is performed. If the value is not set to 1, the process is ended.

The reason why step **S71** is provided is that, regardless of whether the process shown in FIG. **6** has been performed or not, the process shown in FIG. **7** will be performed immediately after boot of the DVD recorder **21.** In other words, if it is after a reboot that follows the process shown in FIG. **6,** the process proceeds to step **S72.** On the other hand, when the DVD recorder **21** is powered on for a recording or playback, for example, step **S71** alone is executed to end the updating process of FIG. **7,** and then subsequently a recording process or playback process follows.

At step **S72,** the main microcomputer **31** confirms the hardware version of the DVD drive **32.** For example, in the case where the DVD drive **32** retains information specifying the hardware version, the main microcomputer **31** may inquire the DVD drive **32** about the version, and make a confirmation based on the response therefrom. Note that, since the hardware version is finalized upon factory shipment of the DVD recorder **21,** the manufacturer is able to describe the hardware version in an arbitrary area of the non-volatile memory **34.** Therefore, the main microcomputer **31** may confirm the hardware version by referring to the non-volatile memory **34.**

At step **S73,** the main microcomputer **31** transfers a piece of drive firmware which suits the hardware version. To be more specific, as shown in FIG. **5,** information specifying a drive type is described in each piece of drive firmware. This information may be described so as to be associated with the hardware version, or identical to the value of hardware version. As a result, to the DVD drive **32** in the DVD recorder **21,** the main microcomputer **31** specifies a piece of firmware to be used, and reads only the appropriate firmware from the data recording area **34-2** of the non-volatile memory **34,** and transfers it to the DVD drive **32.** The DVD drive **32** receives the transmitted firmware, and utilizes this firmware to update its own firmware.

At step **S74,** the main microcomputer **31** updates the update flag for drive firmware from "1" to "0". Thereafter, the main microcomputer **31** issues a power-off instruction to the timer microcomputer **35.** In response to the instruction from the main microcomputer **31,** the timer microcomputer **35** powers OFF the DVD recorder **21,** thus completing the updating process of the firmware.

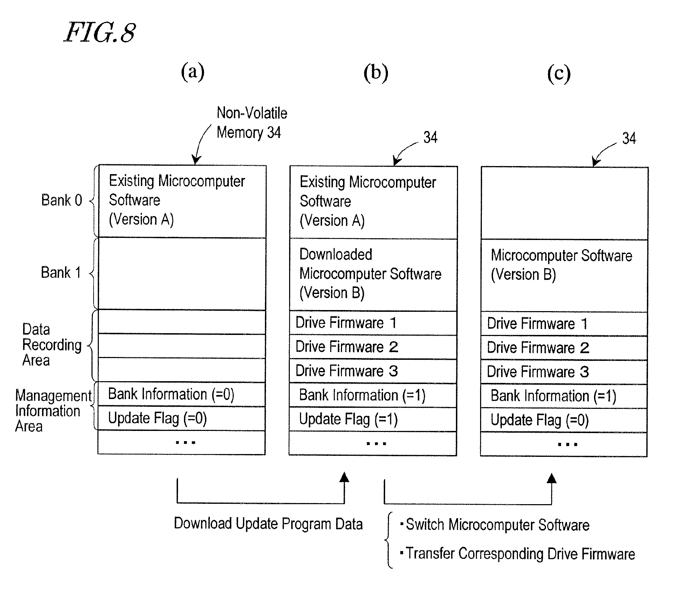

FIGS. **8(a)** to **(c)** show data transitions on the non-volatile memory **34,** which are in connection with the process shown in FIG. **6** and FIG. **7.** FIG. **8(a)** shows the non-volatile memory **34** before the computer program data is acquired. The existing microcomputer software is stored in bank 0, and the value of the bank information is 0. The DVD recorder **21** reads microcomputer software from bank 0 and is booted.

FIG. **8(b)** shows the non-volatile memory **34** after the computer program data has been acquired. More precisely, FIG. **8(b)** shows a state of the non-volatile memory **34** when the processes up to step **S67** of FIG. **6** have been ended. Bank 1 stores a piece of microcomputer software which has been downloaded by utilizing broadcast waves, and the value of the bank information has been changed to 1. The DVD recorder **21** is able to boot by reading the microcomputer software from bank 1. Moreover, the data recording area stores downloaded drive firmware 1 to 3, and the update flag has been changed to 1.

FIG. **8(c)** shows the updated non-volatile memory **34** based on the acquired computer program data. Since the value of the bank information is set to 1, microcomputer software is stored only in bank 1. The microcomputer software in bank 0 may or may not exist, although the figure illustrates absence thereof. Bank 0 is utilized as an area for temporarily storing arbitrary data. On the other hand, among drive firmware 1 to 3, a piece of drive firmware that corresponds to the DVD drive **32** internalized in the DVD recorder **21** has been read and transferred to the DVD drive **32.** In FIG. **8(c),** drive firmware 1 to 3 are shown to be retained even after the transfer; however, they may be deleted from the non-volatile memory **34.**

In the present embodiment, it is assumed that all of the drive firmware shown in FIG. **5** are updated, and therefore only the hardware version is confirmed in step **S72** above. However, it is also contemplated that firmware of a certain hardware version may be updated, but firmware of other hardware versions may not be updated. In such a case, after confirming the hardware version at step **S72,** the version of the existing firmware and the version of the received firmware may be compared so as to determine whether they match or not. If they match, no firmware update is performed; only if they do not match, the firmware may be updated. The version of the received firmware is described in each piece of firmware as version information. Note that, when the update information of the main microcomputer software shown in FIG. **5** indicates absence of update, the computer program code of main microcomputer software does not need to be contained.

The timing of referring to the aforementioned drive type information and version information is not limited to step **S72** of FIG. **7.** For example, when setting an update flag at steps **S67** and **S68** in FIG. **6,** the determination as to whether an update is to be made or not may be made based on the version information and the drive type information, and the update flag may be set to 1 or 0.

The above embodiment assumes that the internal device is the DVD drive **32,** and is directed to a DVD, which is an optical storage medium. However, this is only exemplary. As other storage media, a magnetic storage medium such as a hard disk or a semiconductor storage medium such as a memory card may also be adopted. Regardless of the storage medium, the internal device is able to store the data of the received broadcast program.

Furthermore, without being limited to a recording device, the internal device may be any device that permits its firmware to be updated separately from the software of the main microcomputer. For example, if the tuner **37** of the present embodiment permits its firmware to be updated separately from the microcomputer software, the tuner **37** may be regarded as an internal device, instead of or in addition to the DVD drive **32.**

Note that, in the case where a plurality of internal devices exist, the description of the embodiment will apply to each of the internal devices. In other words, a plurality of hardware versions may be contemplated for each internal device, with different versions of firmware being present for each hardware version. More specifically, assume that three internal devices exist, each being available in three (or less) hardware versions. In this case, a maximum of nine firmware updates are to be stored in the data recording area **34-2** of the non-volatile memory **34.** Since it is expectable that the volume of the firmware for the internal device is sufficiently small as compared to the volume of the software for the main microcomputer, storing the nine firmware updates will not result in a waste of the broadcast wave resource or the hardware resource of the receiver device.

In the embodiment, the receiver acquires computer program data from the broadcast waves of a digital broadcast. However, the receiver may acquire the computer program data and/or broadcast program via a data communication network. In this case, the receiver may comprise a network terminal (not shown) compliant with the Ethernet (registered trademark) standards, and receive data via this terminal. Reception of the computer program data and/or a broadcast program via a data communication network falls within the scope of the aforementioned reception by utilizing broadcast waves.

### INDUSTRIAL APPLICABILITY

The receiver device according to the present invention includes an internal device which permits its firmware to be updated, in addition to a main microcomputer. The receiver is suitable to any application where the main microcomputer software and the firmware of the internal device need to be updated.

## Claims

1. A receiver device for receiving a content, comprising:
a processing section for executing a first computer program to control an operation of the receiver device;
an internal device for retaining a second computer program and executing the second computer program under control of the processing section to function based on the second computer program;
a receiving section for receiving the content and receiving program data concerning an update of a computer program; and
a storage section for storing the first computer program and the received program data, wherein,
one of a plurality of hardware versions is adopted for the internal device, each hardware version having a corresponding second program; and
the program data contains first update information and a plurality of pieces of second update information, the first update information concerning an update of the first computer program, and each of the plurality of pieces of second update information concerning an update of each second computer program.

2. The receiver device of claim 1, wherein,
the storage section has a first area in which an existing old program version of the first computer program is stored, and a second area different from the first area; and
when the first update information contains a new program version of the first computer program, the processing section causes the first update information to be stored in the second area.

3. The receiver device of claim 2, wherein,
the storage section further has a management area in which area indication information is stored, the area indication information indicating one of the first area and the second area; and
when the new program version of the first computer program has been stored in the second area, the processing section generates area indication information indicating the second area and causes the area indication information to be stored in the management area.

4. The receiver device of claim 3, wherein, in accordance with the area indication information, the processing section reads the new program version of the first computer program from the second area, and executes the new program version of the first computer program.

5. The receiver device of claim 2, wherein the storage section further has a third area for storing each of the plurality of pieces of second update information.

6. The receiver device of claim 2, wherein,
each of the plurality of pieces of second update information has type information specifying a corresponding hardware version for the internal device; and
the processing section compares a hardware version of the mounted internal device and the hardware version specified by the type information, and, in accordance with a result of comparison, reads one of the plurality of pieces of second update information and transfers the piece of second update information to the internal device.

7. The receiver device of claim 6, wherein,
each of the plurality of pieces of second update information has version information indicating a program version of the second computer program; and
the processing section compares a program version of the second computer program in the mounted internal device and a program version of the second computer program in the second update information specified by the hardware version information of the internal device, and in accordance with a result of comparison, transfers the second update information to the internal device.

8. The receiver device of claim 7, wherein the internal device updates the second computer program based on the transferred second update information.

9. The receiver device of claim 6, wherein,
the storage section has a management area for storing flag information indicating a result of comparison between program versions of the second computer program; and
the processing section generates flag information indicating a non-matching result of comparison, and causes the flag information to be stored in the management area.

10. The receiver device of claim 9, wherein, in accordance with the flag information, the processing section reads a piece of second update information that corresponds to the mounted internal device from among the plurality of pieces of second update information in the second area, and transfers the piece of second update information to the internal device.

11. The receiver device of claim 1, wherein the storage section is a non-volatile memory.

12. The receiver device of claim 1, wherein the internal device is a recording device for storing data of the received content to the storage medium.
